(19) Europäisches Patentamt
European Patent Office
Office européen des brevets

(11) **EP 1 296 750 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **01951427.2**

(22) Anmeldetag: **27.06.2001**

(51) Int Cl.:
***B01D 53/22*** (2006.01)

(86) Internationale Anmeldenummer:
**PCT/DE2001/002333**

(87) Internationale Veröffentlichungsnummer:
**WO 2002/000329 (03.01.2002 Gazette 2002/01)**

(54) **VERFAHREN ZUR HOCHDRUCK-GASTRENNUNG**

METHOD FOR HIGH-PRESSURE GAS SEPARATION

PROCEDE DE SEPARATION DE GAZ HAUTE PRESSION

(84) Benannte Vertragsstaaten:
**AT BE CH CY DE DK ES FI FR GB GR IE IT LI LU MC NL PT SE TR**

(30) Priorität: **29.06.2000 DE 10030643**

(43) Veröffentlichungstag der Anmeldung:
**02.04.2003 Patentblatt 2003/14**

(73) Patentinhaber:
• **GKSS-Forschungszentrum Geesthacht GmbH**
**21502 Geesthacht (DE)**
• **TuTech Innovation GmbH**
**21079 Hamburg (DE)**
• **Technische Universität Hamburg-Harburg**
**21073 Hamburg (DE)**

(72) Erfinder:
• **PEINEMANN, Klaus-Victor**
**21502 Geesthacht (DE)**
• **SCHOSSIG, Michael**
**21502 Geesthacht (DE)**
• **SARTORELLI, Lorenza**
**64295 Darmstadt (DE)**
• **KULCKE, Walter**
**21635 Jork (DE)**
• **BRUNNER, Gerd**
**21075 Hamburg (DE)**

(74) Vertreter: **Seemann, Ralph et al**
**Patentanwälte**
**Seemann & Partner**
**Ballindamm 3**
**20095 Hamburg (DE)**

(56) Entgegenhaltungen:
WO-A-99/45035    WO-A-99/45036
US-A- 4 754 009    US-A- 5 051 114

• **PATENT ABSTRACTS OF JAPAN vol. 016, no. 556 (C-1007), 26. November 1992 (1992-11-26) & JP 04 215828 A (MITSUBISHI RAYON CO LTD), 6. August 1992 (1992-08-06) -& DATABASE WPI Section Ch, Week 199238 Derwent Publications Ltd., London, GB; Class A14, AN 1992-311586 XP002184691 & JP 04 215828 A (MITSUBISHI RAYON CO LTD) , 6. August 1992 (1992-08-06)**

**Beschreibung**

Die Erfindung betrifft ein Verfahren zur Abtrennung von überkritischem $CO_2$-Gas von darin gelösten Stoffen.

Die Extraktion von Wertstoffen mit überkritischen Kohlendioxid (im folgenden $scCO_2$) ist ein bekanntes Verfahren, das große Vorteile bietet, insbesondere den Verzicht auf umweltbelastende organische Lösemittel. Ein Nachteil des Verfahrens sind die hohen Energiekosten, die durch das komprimieren des Kohlendioxids entstehen, nachdem die extrahierten Substanzen vom überkritischen Kohlendioxid abgetrennt wurden. Bei der Nutzung der Lösefähigkeit des $scCO_2$ zur Stofftrennung werden die im überkritischen Gas gelösten Stoffe in der Regel durch Reduzierung des Druckes vom Prozeßdruck auf nahezu kritischen Druck abgeschieden. Die benötigten Mengen an überkritischem Gas zur Extraktion sind relativ hoch. Zwar besteht ein wesentlich erhöhtes Lösevermögen gegenüber normalen Gasen, dennoch sind die Konzentrationen der gelösten Stoffe relativ klein, da viele der interessierenden Stoffe schwerflüchtig sind.

In technischen Prozessen muß das $scCO_2$ im Kreislauf geführt werden. Die notwendigen Verdichtungsvorgänge erfordern einen hohen Energieaufwand, der dazu führt, daß das Verfahren der Stofftrennung mit überkritischen Gasen gegenüber herkömmlichen Verfahren der Destillation, Vakuumdestillation, Kurzwegdestillation und Molekulardestillation unwirtschaftlich ist.

Es wurde deshalb vielfach versucht, durch geeignete Maßnahmen die im überkritischen Kohlendioxid gelösten Stoffe ohne wesentliche Druckabsenkung vom überkritischen Gas zu trennen. Dazu eignen sich verschiedene Verfahren. Bei der Adsorption wird der gelöste Stoff an einem Adsorptionsmittel, z. B. Aktivkohle oder Silikagel, adsorbiert. Es besteht dann allerdings die Schwierigkeit, den adsorbierten Stoff wiederum vom Adsorbens abzutrennen. Diese Schwierigkeit war bei der Koffeinabscheidung auf Aktivkohle so gravierend, daß das Koffein bei der Entkoffeinierung von grünen Kaffeebohnen nicht wiedergewonnen werden konnte. Man ist daher zu einer anderen Möglichkeit, ohne Druckverlust den Wertstoff zu gewinnen, übergegangen, nämlich der Absorption.

Bei der Entkoffeinierung wird das im überkritischen Kohlendioxid gelöste Koffein durch eine Wäsche mit Wasser ausgewaschen. In diesem Fall ist das Verfahren sehr vorteilhaft, da sich Koffein ausreichend in Wasser löst. Aus der wässrigen Lösung kann dann das Koffein durch Kristallisation gewonnen werden.

Die meisten bei der Stofftrennung mit überkritischen Gasen interessierenden Stoffe sind jedoch in Wasser schwer löslich. Damit scheidet die Absorption in Wasser aus. Eine Absorption in organischen Stoffen ist in der Regel nicht möglich und auch nicht sinnvoll, da sich an die Absorption eine erneute Trennoperation klassischer Art (Destillation) anschließen müßte, was gerade durch die Extraktion mit überkritischem Gas vermieden werden sollte.

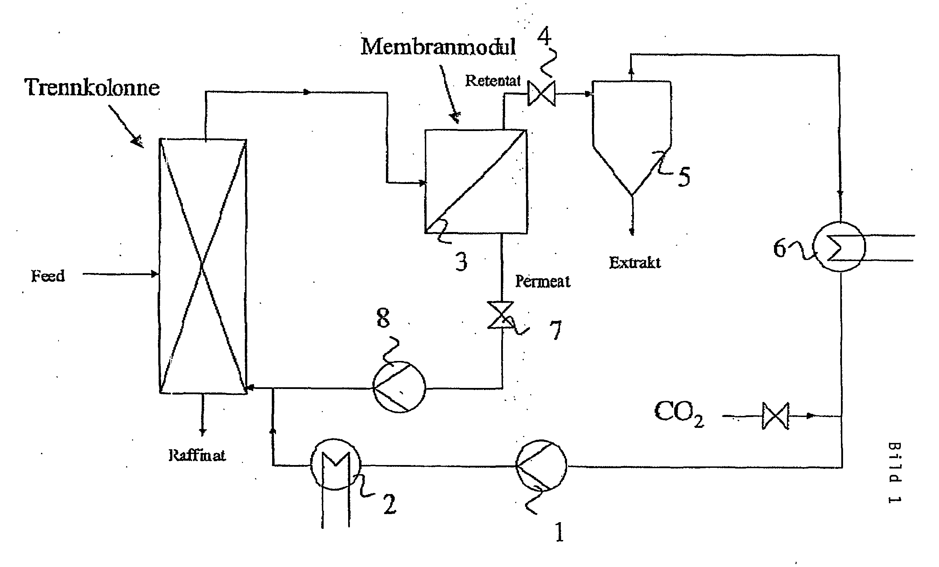

Deshalb ist die Trennung mit Membranen von der Idee her so attraktiv. Es können gelöster Stoff (Extrakt) und überkritisches Gas (Lösemittel) voneinander getrennt werden, ohne daß der Druck des überkritischen Gases wesentlich verringert wird. Abbildung 1 zeigt das Verfahrensschema. Frisches $CO_2$ wird komprimiert (1), gekühlt (2) und im Sumpf einer Trennkolonne aufgegeben. Das zu trennende Feed wird z.B. in der Mitte der Kolonne aufgegeben. Zu trennende Komponente und Lösemittel bewegen sich im Gegenstrom. Dabei wird das Lösemittel mit einer Komponente, z. B. Tocopherolacetat, angereichert. Das angereicherte Lösemittel verläßt die Kolonne am Kopf. Anschließend strömt es in einen Membranmodul. Die Membran (3) läßt selektiv bei geringem Druckverlust das Lösemittel passieren und hält den gelösten Stoff zurück. Das übersättigte Retentat wird anschließend entspannt (4) und in einem Abscheider (5) das Lösemittel vom Extrakt getrennt. Anschließend wird das gereinigte $CO_2$ erwärmt (6) und wieder dem Kreislauf zugeführt. In dem durch die Membran permeierten Lösemittel ist nur noch sehr wenig gelöster Stoff enthalten. An dem Druckhalteventil (7) wird die transmembrane Druckdifferenz eingestellt, die nicht größer als 2 MPa sein sollte. Das so gereinigte Lösemittel kann nach geringer Verdichtung (8) wieder dem Kreislaufprozess zugeführt werden.

Es wurden in der Vergangenheit verschiedene Versuche unternommen, Gemische aus einem überkritischen Gas und darin gelösten Komponenten mit Membranen zu trennen. Dazu wurden anorganische Membranen, zum Teil mit unterstützender organischer Trennschicht, oder rein organische Membranen verwendet. Diese Versuche haben jedoch zu keinem verwertbaren Ergebnis geführt. Die Schwierigkeit der Trennung liegt einerseits darin, daß die Membran porenfrei sein muß, d. h., daß ein Transport durch die Membran nur auf diffusivem Wege erfolgen kann. Andererseits lösen sich überkritische Gase besonders gut in organischen Polymeren. Durch diese Lösung werden die Membranen verändert und die im überkritischen Gas gelösten Stoffe können sich nun ihrerseits besonders gut in der Membran lösen. Damit ergibt sich eine schlechte Trennung. Es wurde sogar gefunden, daß die gelösten Stoffe schneller permeieren als das überkritische Gas, womit genau das Gegenteil des gewünschten Effektes erreicht wird.

Aus den WO-A-99 45 036 und WO-A-99 45 035, deren Gegenstände eng zusammenhängen, sind ein Verfahren zur Herstellung von Polyolefinen sowie ein Verfahren zur Behandlung des dabei entstandenen Gasstromes bekannt. Bei diesen Verfahren wird mindestens ein Monomer in einem Gasphasenreaktor polymerisiert. Der dabei erhaltene Gasstrom enthält Polyolefine und nicht umgesetzte Verbindungen, welche durch Membranabtrennung aus dem Gasstrom entfernt werden. Das Medium in den Gasphasenreaktoren kann dabei - muß aber nicht - in einem superkritischen Zustand vorliegen. Die nicht umgesetzten Verbindungen werden aus dem Gasstrom mittels einer Membran abgetrennt. Als Gas dient dabei Wasserstoff. Bevor die Abtrennung mit Hilfe der Membran vorgenommen wird, durchläuft der Gasstrom jedoch einen Kondensator, nach welchem sich der Gasstrom in einem unterkritischen Zustand befindet.

Als Membran kann dabei eine Membran mit der Handelbezeichnung Teflon AF 2400 eingesetzt werden.

Eine derartige Membran auf Basis von Perfluor-2,2-dimethyl-1,3-dioxol wird auch bei dem in der US-A-5 051 114 beschriebenen Verfahren zur Abtrennung oder Anreichung einer Vielzahl von Gasmischungen eingesetzt. Diese Gasmischungen befinden sich jedoch nicht in einem überkritischen Zustand.

Es wurde nun überraschend gefunden, daß bei einer speziellen Membranbeschichtung mit amorphen Teflon erstmals eine hervorragende Trennung von überkritischem $CO_2$ und gelösten Stoffen unter Prozeßbedingungen von bis zu 350 bar bei Temperaturen von 40 bis 100°C erreicht werden konnte. Die Permeabilität ist dabei noch so groß, daß relativ kleine Membranmodule zur Abscheidung der gelösten Stoffe und zur Regenerierung des im Kreislauf geführten überkritischen Gases ausreichen. Damit ist der entscheidende Schritt gelungen, Trennverfahren und Reaktion unter Anwendung überkritischer Gase wirtschaftlich konkurrenzfähig zu machen. Besonderheit der Erfindung ist die trennaktive Schicht der Membran, die aus einem perfluorierten Kunststoff besteht. Dabei handelt es sich um ein Polymer aus Perfluor-2,2-dimethyl-1,3-dioxol oder um ein Copolymer aus Perfluor-2,2-dimethyl-1,3-dioxol und Tetrafluorethylen. Dieses amorphe Teflon ist kommerziell von der Firma DuPont unter dem Handelsnamen Teflon AF 1600 und Teflon AF 2400 erhältlich. Membranen aus Teflon AF sind bekannt (US-A-5 051 114 und US-A-5 147 417). Neu ist jedoch die Anwendung dieser Membranen für die Abtrennung von überkritischen $CO_2$ Gasen. Teflon AF ist ein sehr inertes Polymer, was sich unter anderem darin wiederspiegelt, daß es nur in wenigen fluorierten Lösemitteln löslich ist. Alle anderen organischen Lösemittel und überkritischen Gase haben nur eine sehr geringe Wechselwirkung mit dem Polymer. Auf dieser geringen Quellbarkeit mit überkritischen Gasen beruht die gute Trennwirkung des Teflons AF im vorliegenden Fall.

Beispiel

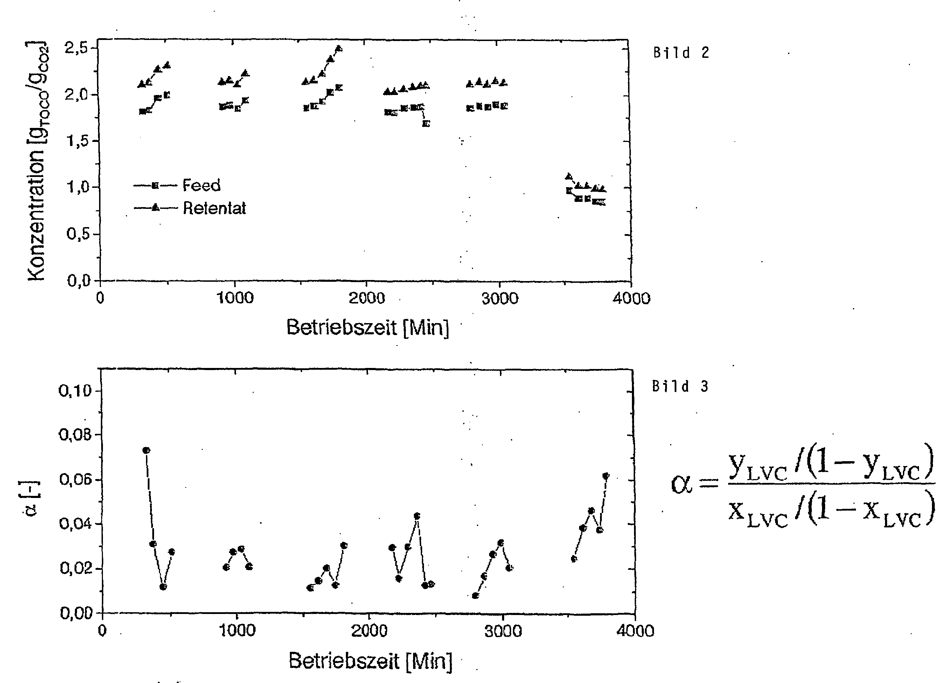

a) In den Abbildungen 2, 3, und 4 die Ergebnisse einer Reihe von Trennversuchen aufzeigt. Verwendet wurde eine Kompositmembran aus mikroporösem Polyetherimid und porenfreiem Teflon AF 2400. Gezeigt ist der zeitliche Verlauf der Tocopherolacetat-Konzentrationen im Feed und im Retentat des Membranmoduls (Abbildung 2) und die zu diesen Messungen gehörigen Trennfaktoren (Abbildung 3).

Der Trennfaktor $\alpha$ ist wie folgt definiert:

$$\alpha = \frac{y_{LVC}/(1-y_{LVC})}{x_{LVC}/(1-x_{LVC})}$$

Die Graphiken zeigen die Ergebnisse, die an 6 aufeinanderfolgenden Versuchstagen gemessen wurden. Die Betriebszeit entspricht der Zeit, in der die Anlage bei Betriebsbedingungen betrieben wurde. In den Betriebspausen war die Fluiddichte die gleiche wie im Betrieb, jedoch hatte die Anlage Raumtemperatur.

Wie an den geringen Trennfaktoren zu sehen ist, bleibt die Membran über die gesamte Betriebszeit stabil und verliert nicht ihre Selektivität. Auch eine Halbierung der Feedkonzentration (bei ca. 3.500 Min) führt zu keiner grossen Veränderung des Trennfaktors.

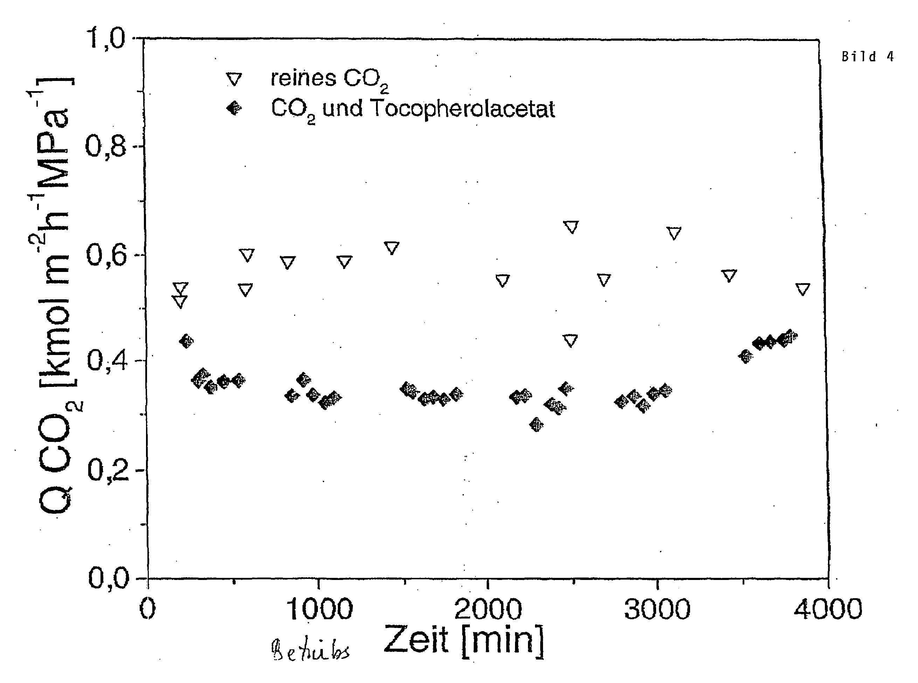

In Abbildung 4 ist die $CO_2$-Permeabilität durch die Membran aufgezeigt. Für reines $CO_2$ im Feed (offenes Dreieck) beträgt die Permebilität ca. $0,6 \dfrac{Kmol}{m^2 \, nMPa}$

Zu Zeiten, in denen das Feed aus einer Mischung $CO_2$ und Tocopherolacetat besteht, sind die $CO_2$-Permeabilitäten

kleiner $\left( ca. \; 0,35 \dfrac{Kmol}{m^2 \, nMPa} \right).$

Eine Verringerung der TOCO-Konzentration im Feed (ca. bei 3.500 Min) führt zu einer größeren $CO_2$-Permeabilität.

**Patentansprüche**

1. Verfahren zur Abtrennung von überkritischem $CO_2$-Gas von darin gelösten Stoffen, wobei zur Abtrennung eine gasdurchlässige, porenfreie Membran verwendet wird, die aus einem Homopolymer aus Perfluor-2,2-dimethyl-1,3-dioxol oder aus einem Copolymer aus Perfluor-2,2-dimethyl-1,3-dioxol und Tetrafluorethylen aufgebaut ist.

2.  Verfahren nach Anspruch 1, **dadurch gekennzeichnet, daß** das Copolymer 65-99 mol-% Perfluor-2,2-dimethyl-1,3-dioxol enthält.

3.  Verfahren nach Anspruch 1 oder 2, **dadurch gekennzeichnet, daß** die verwendete Membran eine Kompositmembran ist, deren selektive Trennschicht aus den im Anspruch 1 oder 2 genannten Polymeren besteht.

4.  Verfahren nach Anspruch 3 **dadurch gekennzeichnet, daß** die Dicke der selektiven Trennschicht zwischen 0,2 und 20 $\mu$m beträgt.

5.  Verfahren nach Anspruch 3 oder 4 **dadurch gekennzeichnet, daß** die Trägermembran aus porösem Polyetherimid besteht.

6.  Verfahren nach Anspruch 3 oder 4, **dadurch gekennzeichnet, daß** die Trägermembran aus porösem Polyvinylidenfluorid besteht.

7.  Verfahren nach Anspruch 3 oder 4, **dadurch gekennzeichnet, daß** die Trägermembran aus porösem Polyethersulfon besteht.

8.  Verfahren nach Anspruch 3 oder 4, **dadurch gekennzeichnet, daß** die Trägermembran aus porösem Polyacrylnitril besteht.

9.  Verfahren nach Anspruch 3 oder 4, **dadurch gekennzeichnet, daß** die Trägermembran aus einer porösen anorganischen Keramik besteht.

**Claims**

1.  Process for separating supercritical $CO_2$ gas from substances dissolved therein, wherein a gas permeable, pore-free membrane is used for the separation which is formed from a homopolymer of perfluoro-2,2-dimethyl-1,3-dioxole or from a copolymer of perfluoro-2,2-dimethyl-1,3-dioxole and tetrafluoroethylene.

2.  Process according to claim 1, **characterised in that** the copolymer contains 65-99 mol% perfluoro-2,2-dimethyl-1,3-dioxole.

3.  Process according to claim 1 or 2, **characterised in that** the membrane used is a composite membrane, of which the selective separating layer consists of the polymers mentioned in claim 1 or 2.

4.  Process according to claim 3, **characterised in that** the thickness of the selective separating layer is between 0.2 and 20 $\mu$m.

5.  Process according to claim 3 or 4, **characterised in that** the carrier membrane consists of porous polyether imide.

6.  Process according to claim 3 or 4, **characterised in that** the carrier membrane consists of porous polyvinylidene fluoride.

7.  Process according to claim 3 or 4, **characterised in that** the carrier membrane consists of porous polyether sulphon.

8.  Process according to claim 3 or 4, **characterised in that** the carrier membrane consists of porous polyacryl nitrile.

9.  Process according to claim 3 or 4, **characterised in that** the carrier membrane consists of a porous anorganic ceramic.

**Revendications**

1.  Procédé de séparation entre le $CO_2$ supercritique et des substances qui y sont dissoutes, dans lequel est utilisée à fins séparatives une membrane non poreuse perméable aux gaz qui est constituée d'un homopolymère de perfluoro-2,2-diméthyl-1,3-dioxolane ou d'un copolymère de perfluoro-2,2-diméthyl-1,3-dioxolane et de tétrafluoréthylène.

**2.** Procédé selon la revendication 1, **caractérisé en ce que** le polymère contient 65-99% en moles de perfluoro-2,2-diméthyl-1,3-dioxolane.

**3.** Procédé selon la revendication 1 ou 2, **caractérisé en ce que** la membrane utilisée est une membrane composite dont la couche de séparation sélective se compose des polymères désignés dans la revendication 1 ou 2.

**4.** Procédé selon la revendication 3, **caractérisé en ce que** l'épaisseur de la couche de séparation sélective se situe entre 0,2 et 20 $\mu$m.

**5.** Procédé selon la revendication 3 ou 4, **caractérisé en ce que** la membrane porteuse se compose de polyétherimide poreux.

**6.** Procédé selon la revendication 3 ou 4, **caractérisé en ce que** la membrane porteuse se compose de fluorure de polyvinylidène poreux.

**7.** Procédé selon la revendication 3 ou 4, **caractérisé en ce que** la membrane porteuse se compose de polyéthersulfone poreuse.

**8.** Procédé selon la revendication 3 ou 4, **caractérisé en ce que** la membrane porteuse se compose de polyacrilonitrile poreux.

**9.** Procédé selon la revendication 3 ou 4, **caractérisé en ce que** la membrane porteuse se compose d'une céramique minérale poreuse.

Bild 1

Trennkolonne

Membranmodul

Feed

Raffinat

Extrakt

Retentat

Permeat

$CO_2$

1

2

3

4

5

6

7

8

Bild 2

Bild 3

$$\alpha = \frac{y_{LVC}/(1-y_{LVC})}{x_{LVC}/(1-x_{LVC})}$$

EP 1 296 750 B1

EP 1 296 750 B1